# EUROPÄISCHE PATENTSCHRIFT

(11) **EP 2 682 342 B1**
(45) Veröffentlichungstag und Bekanntmachung des Hinweises auf die Patenterteilung: **09.09.2015**
(21) Anmeldenummer: 13170896.8
(22) Anmeldetag: 06.06.2013
(51) Int. Cl.: B65B 31/00, B65B 55/00, B29C 45/00, B29C 45/17, B29C 45/42, B29C 45/72

(54) **Vorrichtung zur Herstellung und Verpackung von hochreinen Spritzgussteilen**
Device for the production and packaging of high purity injection-moulded parts
Dispositif pour la fabrication et l'emballage de pièces moulées par injection de haute pureté

(30) Priorität: 03.07.2012 DE 102012013143
(43) Veröffentlichungstag der Anmeldung: 08.01.2014
(73) Patentinhaber: Schilling Engineering GmbH, 79793 Wutöschingen (DE)
(72) Erfinder: Schilling, Günther, 79771 Klettgau (DE); Schilling, Gaby, 81243 München (DE); Schilling, Ute, 81243 München (DE)
(74) Vertreter: Daub, Thomas

(56) Entgegenhaltungen:
- DE-A1- 10 254 762
- US-A- 5 953 884
- US-A1- 2005 223 677
- US-A1- 2012 076 883

## Beschreibung

### Stand der Technik

Die Erfindung betrifft eine Vorrichtung zur Herstellung und Verpackung von hochreinen Spritzgussteilen sowie Komponenten hierzu nach den Oberbegriffen der unabhängigen Patentansprüche.

Aus der US 5 953 884 A ist bereits eine Vorrichtung zur Herstellung und Verpackung von hochreinen Spritzgussteilen bekannt, die eine Spritzgusseinheit aufweist, welche zum Herstellen der einzelnen Spritzgussteile vorgesehen ist. Die Vorrichtung weist eine Verpackungseinheit, welche zum Verpacken der Spritzgussteile vorgesehen ist, und eine als ein Drehteller ausgebildete Fördereinheit, welche zum Zuführen der Spritzgussteile in die Verpackungseinheit vorgesehen ist, auf. Die Vorrichtung umfasst eine Reinraumgehäuseeinheit, welche zum Vorhalten von Reinluft und zum mindestens teilweisen Aufnehmen der Spritzgusseinheit, der Verpackungseinheit und der Fördereinheit in der Reinluft vorgesehen ist.

Die Reinraumtechnik spielt insbesondere in der Pharmaindustrie sowie der Medizinal-, der Mikro- und der Lebensmitteltechnik eine große Rolle. In der Reinraumtechnik ist kontrollierte Sauberkeit oberstes Gebot. Durch gesetzliche Auflagen wird die Reinheit von Räumen durch ISO14644-1 und GMP EU Richtlinien festgeschrieben, wobei die ISO-Norm die maximal zulässige Anzahl an Partikeln beschreibt. Die GMP EU Richtlinie reguliert die zulässige Keimanzahl. Um angemessene Reinheit zu gewährleisten, müssen Kontaminationsquellen identifiziert und in die Reinraumplanung mit einbezogen werden. Bedingt durch die Freisetzung von einer Vielzahl an Partikeln stellt der Mensch im Reinraum eine Kontaminationsquelle dar. Durch Automatisierung kann der Verschmutzung durch den Menschen entgegengewirkt werden. Der damit geringere Aufwand zur Herstellung eines sauberen Umfelds sowie ein Wegfallen von Reinraumkleidung und Schleusen reduzieren die Kosten für Produzenten. Des Weiteren können die Teile- und Prozessqualität erhöht werden sowie Nacharbeit verringert werden.

Eine häufige Anwendung für Reinräume ist in der Medizintechnikbranche im Bereich des Spritzgusses. Hierzu ist eine Vorrichtung zur Herstellung und Verpackung von hochreinen Spritzgussteilen bekannt. Die Vorrichtung umfasst eine Spritzgusseinheit, welche zum Herstellen der einzelnen Spritzgussteile vorgesehen ist, eine Verpackungseinheit, welche zum Verpacken der Spritzgussteile vorgesehen ist, und eine Fördereinheit, welche zum Zuführen der Spritzgussteile in die Verpackungseinheit vorgesehen ist, wobei die Vorrichtung eine Reinraumgehäuseeinheit aufweist, welche zum Vorhalten von Reinluft und zum mindestens teilweisen Aufnehmen der Spritzgusseinheit , der Verpackungseinheit und der Fördereinheit in der Reinluft vorgesehen ist.

Üblicherweise stehen diese Spritzgusseinheiten außerhalb eines Reinraums. Dies bedeutet, dass die Spritzgussteile außerhalb des Reinraums produziert und anschließend mit Tunnel in den Reinraum geleitet werden. Dort werden sie in der Regel in Beutel verpackt. Eine manuelle Prüfung der Spritzgussteile sowie Entnahme der Beutel im Reinraum mittels Menschen ist meist vorzufinden.

Der Erfindung liegt insbesondere die Aufgabe zugrunde, eine Vorrichtung zur Herstellung und Verpackung von hochreinen Spritzgussteilen bereitzustellen, mit welcher eine erhebliche Reduzierung des Handhabungsaufwands und eine Verbesserung der Prozesssicherheit ermöglicht wird. Ebenso sollen Komponenten dazu geschaffen werden.

Die Aufgabe wird erfindungsgemäß durch die Merkmale des Patentanspruchs 1 gelöst, wobei weitere Ausgestaltungen der Erfindung den Ansprüchen 2 bis 14 entnommen werden können.

Die Erfindung geht aus von einer Vorrichtung zur Herstellung und Verpackung von hochreinen Spritzgussteilen mit einer Spritzgusseinheit, weiche zum Herstellen der einzelnen Spritzgussteile vorgesehen ist, einer Verpackungseinheit, welche zum Verpacken der Spritzgussteile vorgesehen ist, und einer Fördereinheit, welche zum Zuführen der Spritzgussteile in die Verpackungseinheit vorgesehen ist, wobei die Vorrichtung eine Reinraumgehäuseeinheit aufweist, welche zum Vorhalten von Reinluft und zum mindestens teilweisen Aufnehmen der Spritzgusseinheit , der Verpackungseinheit und der Fördereinheit in der Reinluft vorgesehen ist.

Es wird vorgeschlagen, dass die zum Zuführen der Spritzgussteile in die Verpackungseinheit vorgesehene Fördereinheit eine Rutschschieneneinheit aufweist.

Hierdurch kann sichergestellt werden, dass eine aufgrund von Eigengewicht gleichmäßige Zuführung von Spritzgussteilen ohne hohen technischen Aufwand und damit kostengünstig realisiert werden kann. Ein Vorteil der Erfindung besteht darin, dass die Vorrichtung eine Reinraumgehäuseeinheit aufweist, welche zum Vorhalten von Reinluft und zum mindestens teilweisen Aufnehmen der Spritzgusseinheit, der Verpackungseinheit und der Fördereinheit in der Reinluft vorgesehen ist. In diesem Zusammenhang soll unter "Einheit" insbesondere eine Gesamteinheit verstanden werden, welche auch aus mehreren Einzeleinheiten bestehen kann. In vorteilhafter Weise kann hierdurch in einer nach außen abgekapselten Reinraumgehäuseeinheit eine hochautomatisierte Produktion von Spritzgussteilen ohne Bedienpersonal erfolgen, wodurch eine definierte Reinheitsklasse gewährleistet und das Produkt vor Verunreinigung geschützt werden kann. Insbesondere kann dadurch eine Kontamination der Spritzgussteile durch den Menschen innerhalb der Reinraumgehäuseeinheit weitest gehend vermieden werden. Der damit einhergehende geringere Aufwand zur Herstellung eines sauberen Umfelds sowie ein Wegfallen von Reinraumkleidung und Schleusen kann die Kosten für die Herstellung reduzieren. Des Weiteren kann durch die erfindungsgemäße Vorrichtung die Qualität der Spritzgussteile und die Prozessqualität erhöht sowie der Ausschuss verringert werden. Durch eine Automatisierung des Prozessablaufs bis zur Endentnahme der verpackten Produkte kann in vorteilhafter Weise die Reinraumgehäuseeinheit und somit die Vorrichtung kompakt ausgeführt werden, was zu einer Flächenreduzierung und Volumenreduzierung des benötigten Reinraums führen kann. Durch einen energieeffzienten Reinraum können somit die Kosten der Vorrichtung reduziert werden.

In vorteilhafter Ausgestaltung der Erfindung weist die Vorrichtung eine Reinraumversorgungseinheit auf, welche zur Versorgung der Reinraumgehäuseeinheit mit Reinluft vorgesehen ist. Hierdurch kann eine kontinuierliche Qualität der Reinluft mit einem definierten Reinheitsgrad in der gesamten Reinraumgehäuseeinheit eingehalten werden. Alle Fertigungsschritte können in einem Reinraumsystem unter reproduzierbaren Bedingungen durchgeführt werden. Die Reinheit der Reinluft kann vom Fertigungsprozess bis zur Verpackung auf einem konstant hohen Qualitätsniveau gehalten werden.

Zweckmäßigerweise umfasst die Verpackungseinheit ein Shieldingbeutel-Verpackungssystem und/oder ein Blister-Verpackungssystem und/oder ein Bag-in-Bag-Verpackungssystem und/oder ein Bag-in-Box-Verpackungssystem. In vorteilhafter Weise können dadurch die in der Reinraumgehäuseeinheit bei Reinluft hergestellten und in einer Reinluftumgebung bzw. unter Reinluftbedingungen verpackten Spritzgussteile gegen Verunreinigung und/oder Elektrostatik und/oder gegen Feuchtigkeit und/oder physische Beschädigungen und/oder umweltbedingte Beschädigungen während der Fertigung, dem Transport oder der Lagerung optimal geschützt werden. Insbesondere kann durch die Technik der Doppelverpackung beim Bag-in-Box-Verpackungssystem oder beim Bag-in-Bag-Verpackungssystem keine kontaminierte Luft mit dem verpackten Spritzgussteil in Verbindung kommen, wodurch die hohe Reinheit des Spritzgussteils gewährleistet werden kann. Die verpackten Spritzgussteile können unter Reinraumbedingungen keimarm und partikelarm sowie steril und sterilisierbar hergestellt werden. Die Reinheit der Innenverpackung kann bis zum Kunden durch die Bag-in-Bag-Konzepte oder Bag-in-Box-Konzepte sichergestellt werden.

Es wird vorgeschlagen, dass die zum Zuführen der Spritzgussteile in die Verpackungseinheit vorgesehene Fördereinheit eine entlang eines Vorschubweges geführte Transporteinrichtung zum Befüllen mit Spritzgussteilen aufweist. In vorteilhafter Weise kann hierdurch das Spritzgussteil sicher und schonend transportiert und kontrolliert der Verpackungseinheit zugeführt werden. Somit können der Verpackungseinheit stets Spritzgussteile in ausreichender Menge zugeführt und während des Betriebs der Vorrichtung ein reibungsloser Ablauf gewährleistet werden.

In weiterer vorteilhafter Ausgestaltung der Erfindung umfasst die zum Zuführen der Spritzgussteile in die Verpackungseinheit vorgesehene Fördereinheit eine Entnahmeeinheit zum Entnehmen der Spritzgussteile aus der Spritzgusseinheit und Befüllen der Transporteinrichtung oder der Rutschschieneneinheit mit Spritzgussteilen.

In vorteilhafter Weise können hierdurch die Spritzgussteile gezielt von der Spritzgusseinheit entnommen, sicher und schonend transportiert und an die Fördereinheit abgegeben werden. Durch die konzentrierte räumliche Anordnung der zusammenwirkenden Einheiten kann hierdurch gleichzeitig eine Entnahme der Spritzgussteile von der Spritzgusseinheit sowie ein geordnetes korrektes Befüllen der Fördereinheit mit Spritzgussteilen aus der Entnahmeeinheit erfolgen, wodurch sich eine erhebliche Zeitersparnis ergibt. Hierdurch ist in kurzer Zeit das Befüllen der Fördereinheit mit großen Mengen an Spritzgussteilen möglich.

In einer weiteren Ausgestaltung wird vorgeschlagen, dass die Vorrichtung eine zwischen Spritzgusseinheit und Verpackungseinheit angeordnete lonisierungseinheit aufweist, welche zum statischen Entladen der Spritzgussteile vorgesehen ist. Ein wesentlicher Vorteil der lonisierungseinheit ist die Entfernung von Staubteilchen aus der Luft und eine Entladung der zuvor statisch aufgeladenen Partikel auf einem Spritzgussteil, wodurch eine Reinigung der Luft bzw. der Spritzgussteile erreicht werden kann. In vorteilhafter Weise kann durch die Ionisierung die an der Oberfläche der Spritzgussteile vorbeiströmende Luft leitfähig gemacht werden und eine Entladung der zuvor statisch aufgeladenen Partikel bewirken, so dass letztere von der vorbeiströmenden Luft leichter abgeschält und abgesaugt werden können.

In einer Ausgestaltung wird vorgeschlagen, dass die Vorrichtung eine zwischen Spritzgusseinheit und Verpackungseinheit angeordnete Kühlungseinheit aufweist, welche zum Kühlen der Spritzgussteile vorgesehen ist. In vorteilhafter Weise kann hierdurch das Spritzgussteil kontrolliert abgekühlt werden. Zusätzlich ist ein Abkühlen des Spritzgussteils auf eine verpackungsmaterialverträgliche Temperatur möglich.

In weiterer vorteilhafter Ausgestaltung der Erfindung weist die Vorrichtung eine zwischen Spritzgusseinheit und Verpackungseinheit angeordnete Prüfeinheit auf, welche zur Prüfung der Spritzgussteile auf Dichtigkeit und/oder Vollständigkeit und/oder Einschlüsse und/oder Maßhaltigkeit vorgesehen ist. In vorteilhafter Weise kann durch die automatisierten Prüfverfahren der Prüfeinheit eine hohe Qualität jedes einzelnen Spritzgussteils erreicht bzw. gewährleistet werden. Dadurch kann das Risiko von Störungen und Unterbrechungen auf Grund fehlerhafter Spritzgussteile bzw. produzierter Schlechtteiler während des Betriebs reduziert werden, was wiederum Zeit und Geld sparen kann. Die Anzahl der Prüfstationen können je nach Bedarf bzw. Kundenwunsch variabel in der erfindungsgemäßen Vorrichtung gewählt werden.

Es wird vorgeschlagen, dass die erfindungsgemäße Vorrichtung eine vor der Prüfeinheit angeordnete Vereinzelungseinheit aufweist, welche zum Vereinzeln der Spritzgussteile vor dem Prüfen vorgesehen ist. In vorteilhafter Weise kann eine Bauteilvereinzelung als Bestandteil des Transportsystems in der erfindungsgemäßen Vorrichtung die Handhabung der Spritzgussteile wesentlich vereinfachen und die Prozesssicherheit auf ein Maximum erhöhen, wodurch eine störungsfreie Produktion erfolgen kann. Besonders vorteilhaft ist, dass die Spritzgussteile durch eine Vereinzelung in der Vereinzelungseinheit definiert angeordnet und an die nächste bzw. eine weitere Einheit übergeben werden können. Die Verwendung der Vereinzelungseinheit kann somit die Prozesszuverlässigkeit sichern und definierte Zustände beim Vereinzeln der Spritzgussteile ermöglichen. Die definierten Positionen der Spritzgussteile vereinfachen sowohl das Greifen der Spritzgussteile als auch das Bestücken von Einheiten mit Spritzgussteilen und viele andere Prozessschritte.

In einer Weiterbildung ist die Entnahmeeinheit und/oder die Vereinzelungseinheit als Greifsystem eines Roboters ausgeführt. In vorteilhafter Weise kann das Greifsystem des Roboters unterschiedliche Werkzeugsysteme aufnehmen und damit eine Vielzahl von Bewegungsabläufen ausführen bzw. unterschiedliche, auch kompliziertere Spritzgussteile greifen. Somit kann das Werkzeugsystem des Roboters sowohl in der Entnahmeeinheit als auch in der Vereinzelungseinheit fungieren. Da der Roboter vorzugsweise die unterschiedlichen Werkzeugsysteme automatisch wechseln kann, ergibt sich ein konstanter Betrieb mit kalkulierbaren Stückzahlen.

In vorteilhafter Weise ist die Vereinzelungseinheit als Schikanensystem der Fördereinheit ausgeführt. Ein wesentlicher Vorteil ist die gezielte Zuführung oder Sortierung der Spritzgussteile zur nächsten Einheit, welche als Schüttgut oder sortierte Einzelteile vorliegen können. Die Umrüstung auf ein neues Bauteil kann mit geringem technischen Aufwand einfach und schnell erfolgen.

In einer Ausgestaltung weist die erfindungsgemäße Vorrichtung eine Kennzeichnungseinheit auf, welche zum Kennzeichnen der verpackten Spritzgussteile vorgesehen ist. In vorteilhafter Weise kann hierdurch eine Information über den verpackten Inhalt angebracht werden. Die Kennzeichnung des verpackten Inhalts kann außerdem spezielle Angaben umfassen, damit eine sichere Handhabung gewährleistet werden kann. Hierdurch kann auf unterschiedliche Weise vor, während oder nach dem Befüllen der Verpackung eine dauerhafte Kennzeichnung der Verpackung erfolgen.

Ferner wird eine Reinluftprüfeinheit vorgeschlagen, welche zum Prüfen/Überwachen des Reinheitsgrads der Reinluft in der Reinraumgehäuseeinheit vorgesehen ist. In vorteilhafter Weise kann hierdurch eine gleichbleibende reproduzierbare Qualität der verpackten Spritzgussteile während des gesamten Herstellungsprozesses gewährleistet werden.

In einer weiteren Ausgestaltung weist die erfindungsgemäße Vorrichtung eine Zutrittseinheit auf, welche zum Zutritt von Bedienpersonal zum Durchführen eines Werkzeugwechsels an der Spritzgusseinheit vorgesehen ist. Hierdurch kann das Bedienpersonal in die Reinraumgehäuseeinheit eintreten und unter Reinraumbedingungen die Spritzgusseinheit bedienen oder Arbeiten an der Spritzgusseinheit vornehmen. Nach dem Zugang des Bedienpersonals kann die Zutrittseinheit der Reinraumgehäuseeinheit geschlossen werden, um eine Kontaminationsgefahr zu reduzieren bzw. um den Zutritt von nicht berechtigten Personen zu verhindern.

### Zeichnungen

Weitere Vorteile ergeben sich aus der folgenden Zeichnungsbeschreibung. In den Zeichnungen ist ein Ausführungsbeispiel der Erfindung dargestellt.

Es zeigen:

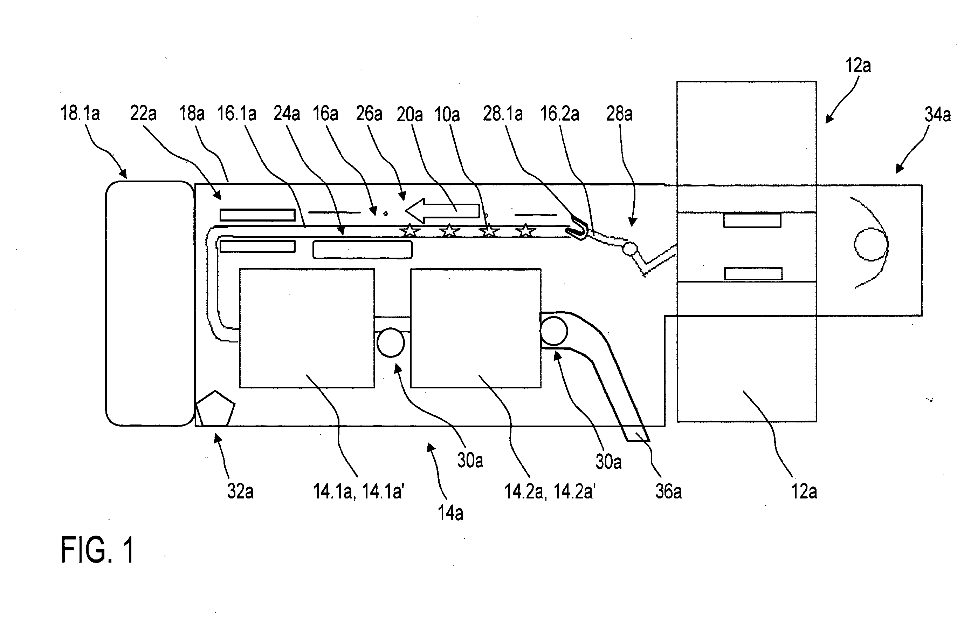

- Fig. 1: in einer schematischen Darstellung ein Ausführungsbeispiel einer erfindungsgemäßen Vorrichtung mit einer Spritzgusseinheit, einer Verpackungseinheit, einer Kühlungseinheit, einer Ionisierungseinheit, einer Prüfeinheit, einer Vereinzelungseinheit, einer Kennzeichnungseinheit, einer Reinluftprüfeinheit, einer Zutrittseinheit und einer Fördereinheit, die eine entlang eines größtenteils linearen Vorschubwegs geführte Transporteinrichtung umfasst, wobei die Einheiten in einer Reinraumgehäuseeinheit aufgenommen sind, und

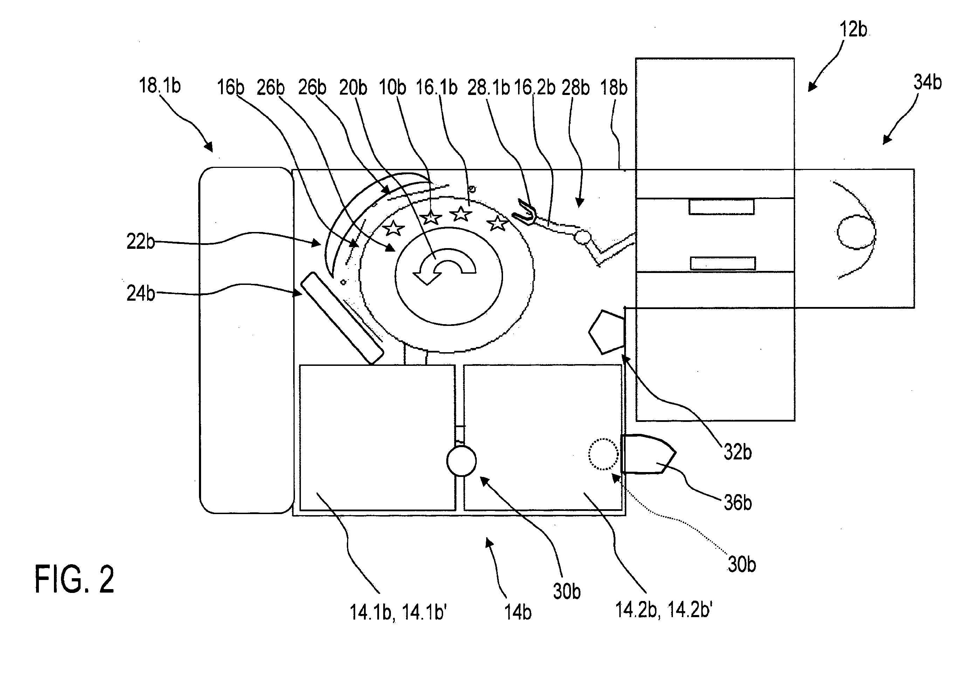

- Fig. 2: in einer schematischen Darstellung ein Ausführungsbeispiel einer Vorrichtung mit den in der Reinraumgehäuseeinheit aufgenommenen Einheiten gemäß Fig. 1, wobei die Fördereinheit eine entlang eines größtenteils rotatorischen Vorschubwegs geführte Transporteinrichtung umfasst.

### Beschreibung der Ausführungsbeispiele

Die Fig. 1 und 2 zeigen eine Vorrichtung zur Herstellung und Verpackung von hochreinen Spritzgussteilen 10a, 10b mit einer Spritzgusseinheit 12a, 12b, welche zum Herstellen der einzelnen Spritzgussteile 10a, 10b vorgesehen ist, einer Verpackungseinheit 14a, 14b, welche zum Verpacken der Spritzgussteile 10a, 10b vorgesehen ist, und einer Fördereinheit 16a, 16b, welche zum Zuführen der Spritzgussteile 10a, 10b in die Verpackungseinheit 14a, 14b vorgesehen ist. Das Spritzgießen und das Verpacken der Bauteile finden unter Reinraumbedingungen auf möglichst engem Raum statt, um absolute Sterilität der Spritzgussteile 10a, 10b garantieren zu können, sodass keine zusätzliche Sterilisation der Spritzgussteile 10a, 10b nach der Entnahme aus der Verpackung notwendig ist.

Die oben genannten drei Einheiten 12a, 12b, 14a, 14b, 16a und 16b der Vorrichtung stehen in einer Wirkverbindung zueinander bzw. sind funktional miteinander verbunden, d.h. die Spritzgusseinheit 12a, 12b ist mit der Fördereinheit 16a, 16b gekoppelt, welche wiederum mit der Verpackungseinheit 14a, 14b in Verbindung steht. D.h. jedes einzelne Spritzgussteil 10a, 10b durchläuft die drei Einheiten 12a, 12b, 14a, 14b, 16a und 16b der Vorrichtung.

In den vorliegenden Ausführungsbeispielen ist die Fördereinheit 16a, 16b zwischen der Spritzgusseinheit 12a, 12b und der Verpackungseinheit 14a, 14b angeordnet, die hierdurch im Wesentlichen nebeneinanderliegend angeordnet sind. Es sind jedoch auch andere, einem Fachmann als sinnvoll erscheinende Anordnungen der Einheiten 12a, 12b, 14a, 14b, 16a und 16b denkbar.

Um eine Vorrichtung zur Herstellung und Verpackung von hochreinen Spritzgussteilen 10a, 10b bereitzustellen, mit welcher eine erhebliche Reduzierung des Handabungsaufwands und eine Verbesserung der Prozesssicherheit ermöglicht wird, wird erfindungsgemäß vorgeschlagen, dass die Vorrichtung eine Reinraumgehäuseeinheit 18a, 18b aufweist, welche zum Vorhalten von Reinluft und zum mindestens teilweisen Aufnehmen der Spritzgusseinheit 12a, 12b, der Verpackungseinheit 14a, 14b und der Fördereinheit 16a, 16b in der Reinluft vorgesehen ist.

Die Einheiten 12a, 12b, 14a, 14b, 16a und 16b sind vorzugsweise vollständig in der Reinraumgehäuseeinheit 18a, 18b untergebracht, wobei auch eine teilweise Aufnahme einer Einheit oder mehrerer Einheiten möglich ist. Vorstellbar ist beispielsweise eine teilweise Aufnahme der Spritzgusseinheit 12a, 12b, bei welcher nur die Formschließeinheit in der Reinraumgehäuseeinheit 18a, 18b angeordnet und die übrigen Teile der Spritzgusseinheit 12a, 12b außerhalb des Reinraums vorgesehen sind. In vorteilhafter Weise kann hierdurch das auf Grund der großen Abwärme der Spritzgusseinheit 12a, 12b auftretende Problem der Temperaturregelung und des damit verbundenen hohen Energiebedarfs umgangen werden, da die Abwärme außerhalb des Reinraums aus der Spritzgusseinheit austreten kann.

Im vorliegenden Ausführungsbeispiel weist die Vorrichtung mindestens eine Zutrittseinheit 34a, 34b auf, welche zum Zutritt von Bedienpersonal zum Durchführen eines Werkzeugwechsels an der Spritzgusseinheit 12a, 12b vorgesehen ist. Vorzugsweise ist die Reinraumgehäuseeinheit 18a, 18b als Reinraumkabine, Reinraumzelt oder Einhausung ausgeführt. Im vorliegenden Ausführungsbeispiel ist die Reinraumgehäuseeinheit 18a, 18b als eine rechteckförmige Reinraumkabine mit der als Zutrittsschleuse für das Bedienpersonal ausgeführten Zutrittseinheit 34a, 34b ausgebildet. Reinraumkabinen können mit glatten Wandpaneelen und großflächigen Reinraumfenstem modular aufgebaut werden. Variable Größen und ein standardisiertes Stecksystem der Reinraumkabinen ermöglichen eine schnelle und einfache Montage und bieten flexible Umbaumöglichkeiten und Erweiterungsmöglichkeiten. In vorteilhafter Weise können die Reinraumkabinen leicht gereinigt werden. Alternativ hierzu können Reinraumzelte verwendet werden, die durch den Einsatz hochwertiger PVC-Folien für eine sichere Produktionsumgebung sorgen sowie eine optimale Integration von Maschineneinheiten und einen flexiblen Aufbau ermöglichen. Alle Reinraumkabinen, Reinraumzelte oder Einhausungen können mit Filtertechnik und Lüftungstechnik und sehr geräuscharmen Laminarflowmodulen ausgestattet werden. Selbstverständlich sind auch andere, einem Fachmann als sinnvoll erscheinende Systeme für die Reinraumgehäuseeinheit 18a, 18b denkbar.

Damit in der Vorrichtung hochreine Spritzgussteile 10a, 10b gefertigt werden können, weist die Vorrichtung eine Reinraumversorgungseinheit 18.1 a, 18.1 b auf, welche zur Versorgung der Reinraumgehäuseeinheit 18a, 18b mit Reinluft vorgesehen ist. Vorzugsweise umfasst die Vorrichtung eine Reinluftprüfeinheit 32a, 32b, welche zum Prüfen bzw. Überwachen des Reinheitsgrads der Reinluft in der Reinraumgehäuseeinheit 18a, 18b vorgesehen ist. Die Überwachung des Reinheitsgrads der Reinluft kann über einen Partikelcounter und/oder über eine Überdrucksensoreinheit erfolgen.

Gemäß Fig. 1 und 2 weist die zum Zuführen der Spritzgussteile 10a, 10b in die Verpackungseinheit 14a, 14b vorgesehene Fördereinheit 16a, 16b eine entlang eines Vorschubwegs 20a, 20b geführte Transporteinrichtung 16.1a, 16.1b zum Befüllen mit Spritzgussteilen 10a, 10b auf. Als Transporteinrichtung 16.1a, 16.1b kann eine Kettenfördereinrichtung vorgesehen werden, wobei jedoch auch andere, einem Fachmann als sinnvoll erscheinende Elemente der Fördertechnik denkbar sind. In einer ersten Ausführungsform der Vorrichtung gemäß Fig. 1 verläuft die Transporteinrichtung 16.1a der Fördereinheit 16a entlang eines linear ausgebildeten Vorschubwegs 20a, der sich ausgehend von der Spritzgusseinheit 12a parallel zur Verpackungseinheit 14a erstreckt und durch eine bogenförmige Umlenkung in die Verpackungseinheit 14a mündet. In der nicht erfindungsgemäßen Ausführungsform der Vorrichtung gemäß Fig. 2 verläuft die Transporteinrichtung 16.1 b der Fördereinheit 16b entlang eines rotatorisch ausgebildeten Vorschubwegs 20b, der ausgehend von der Spritzgusseinheit 12b in einem kreisförmigen Bogen in die Verpackungseinheit 14b mündet.

Erfindungsgemäß weist die zum Zuführen der Spritzgussteile 10a, 10b in die Verpackungseinheit 14a, 14b vorgesehene Fördereinheit 16a, 16b eine Rutschschieneneinheit auf. Vorzugsweise kann die hier nicht dargestellte Rutschschiene mit einem einen niedrigen Reibungskoeffizienten aufweisenden Kunststoff beschichtet sein, was ein Rutschen von Stückgut begünstigen kann. Ferner kann beispielsweise der Reibungskoeffizient verringert oder beispielsweise die Rutschschiene mit einem Gefälle ausgeführt werden.

Weiterhin umfasst die zum Zuführen der Spritzgussteile 10a, 10b in die Verpackungseinheit 14a, 14b vorgesehene Fördereinheit 16a, 16b eine Entnahmeeinheit 16.2a, 16.2b zum Entnehmen der Spritzgussteile 10a, 10b aus der Spritzgusseinheit 12a, 12b und Befüllen der Transporteinrichtung 16.1a, 16.1b oder der Rutschschieneneinheit mit Spritzgussteilen 10a, 10b.

Zum sicheren Verpacken der Spritzgussteile 10a, 10b umfasst die Verpackungseinheit 14a, 14b ein Shieldingbeutel-Verpackungssystem und/oder ein Blister-Verpackungssystem und/oder ein Bag-in-Bag-Verpackungssystem 14.1a, 14.1b, 14.2a, 14.2b und/oder ein Bag-in-Box-Verpackungssystem 14.1a', 14.1 b', 14.2a', 14.2b'. Im vorliegenden Ausführungsbeispiel ist in den Fig. 1 und 2 die zum Verpacken der Spritzgussteile 10a, 10b vorgesehene Verpackungseinheit 14a, 14b als ein Bag-in-Bag-Verpackungssystem 14.1 a, 14.1b, 14.2a, 14.2b und/oder ein Bag-in-Box-Verpackungssystem 14.1a', 14.1b', 14.2a', 14.2b' ausgeführt.

In vorteilhafter Weise umfasst die Vorrichtung eine zwischen Spritzgusseinheit 12a, 12b und Verpackungseinheit 14a, 14b angeordnete lonisierungseinheit 24a, 24b, welche zum statischen Entladen der Spritzgussteile 10a, 10b vorgesehen ist. Zusätzlich umfasst die Vorrichtung eine zwischen Spritzgusseinheit 12a, 12b und Verpackungseinheit 14a, 14b angeordnete Kühlungseinheit 22a, 22b, welche zum Kühlen der Spritzgussteile 10a, 10b vorgesehen ist. Des Weiteren umfasst die Vorrichtung eine zwischen Spritzgusseinheit 12a, 12b und Verpackungseinheit 14a, 14b angeordnete Prüfeinheit 26a, 26b, welche zur Prüfung der Spritzgussteile 10a, 10b auf Dichtigkeit und/oder Vollständigkeit und/oder Einschlüsse und/oder Maßhaltigkeit vorgesehen ist.

In der ersten Ausführungsform der Vorrichtung gemäß Fig. 1 sind die lonisierungseinheit 24a, die Kühlungseinheit 22a und die Prüfeinheit 26a entlang der linearen Transporteinrichtung 16.1 a angeordnet. In der zweiten Ausführungsform der Vorrichtung gemäß Fig. 2 sind die lonisierungseinheit 24b, die Kühlungseinheit 22b und die Prüfeinheit 26b entlang der rotatorischen Fördereinheit 16b angeordnet.

Gemäß Fig. 1 und 2 sind während des Prozessablaufs zwischen Spritzgusseinheit 12a, 12b und der Verpackungseinheit 14a, 14b entlang der Fördereinheit 16a, 16b drei Prozessschritte vorgesehen, die entweder gleichzeitig oder nacheinander in einer gewünschten Reihenfolge stattfinden können. Der erste Prozessschritt ist eine statische Entladung der Spritzgussteile 10a, 10b in der lonisierungseinheit 24a, 24b, der zweite Prozessschritt ist eine Kühlung der Spritzgussteile 10a, 10b in der Kühlungseinheit 22a, 22b und der dritte Prozessschritt ist eine Prüfung der Spritzgussteile 10a, 10b in der Prüfeinheit 26a, 26b.

Die zwischen Spritzgusseinheit 12a, 12b und Verpackungseinheit 14a, 14b angeordnete lonisierungseinheit 24a, 24b ist zum statischen Entladen der Spritzgussteile 10a,10b vorgesehen. Die statische Entladung der Spritzgussteile 10a, 10b kann während des Kühlvorgangs durch Ionisierung mit Luftstrom und/oder Ionisierung ohne Luftstrom erfolgen.

Die zwischen Spritzgusseinheit 12a, 12b und Verpackungseinheit 14a, 14b angeordnete Kühlungseinheit 22a, 22b ist zum Kühlen der Spritzgussteile 10a, 10b vorgesehen. Die Kühlung der Spritzgussteile 10a, 10b kann über ein Kühlen durch kalte Luftzufuhr und/oder durch die Raumtemperatur entlang der Vorschubwegstrecke 20a, 20b und/oder durch die Raumtemperatur über eine Lagerdauer der Spritzgussteile 10a, 10b erfolgen. Beim Kühlen der Spritzgussteile 10a, 10b entlang der Vorschubwegstrecke 20a, 20b kann der Kühlvorgang zwanzig Sekunden dauern, wobei dies auf der Transporteinrichtung 16.1a, 16.2b geschehen kann. In vorteilhafter Weise existiert zwischen der Kühlung mit Vorschubwegstrecke 20a, 20b und allen Prüfverfahren eine positive Korrelation. Besonders vorteilhaft ist, dass während des Kühlvorgangs die Bauteile 10a, 10b geprüft werden können.

Die zwischen Spritzgusseinheit 12a, 12b und Verpackungseinheit 14a, 14b angeordnete Prüfeinheit 26a, 26b ist zur Prüfung der Spritzgussteile 10a, 10b auf Dichtigkeit und/oder Vollständigkeit und/oder Einschlüsse und/oder Maßhaltigkeit vorgesehen. Zum Prüfen der Spritzgussteile 10a, 10b auf Dichtigkeit können die Verfahren Differenzdruck mit Drucksensor, Wasserstoff mit Halbleitersensor und Helium-Atmosphäre mit Wise-Technology angewandt werden. Zum Prüfen der Spritzgussteile 10a, 10b auf Vollständigkeit kann eine Waage oder eine optische Prüfung über eine Lichtschranke eingesetzt werden. Zum Prüfen der Spritzgussteile 10a, 10b auf Einschlüsse kann eine Zeilenkamera oder eine Flächenkamera verwendet werden oder das Spritzgussteil 10a, 10b kann mit Ultraschall geprüft werden. Zum Prüfen der Spritzgussteile 10a, 10b auf Maßhaltigkeit kann eine Visionskamera, ein holografischer Sensor oder ein Laserscanner eingesetzt werden. In vorteilhafter Weise ergänzen sich das Prüfen bezüglich Einschlüssen und das Prüfen bezüglich Maßhaltigkeit, da hierbei ein gemeinsames optisches System verwendet werden kann. Die Prüfung der Spritzgussteile 10a, 10b kann während des Fördervorgangs der Spritzgussteile 10a, 10b erfolgen. Hierdurch kann die in den Herstellungsprozess der Vorrichtung integrierte Prüfeinheit 26a, 26b die Spritzgussteile 10a, 10b ohne Zeitverlust automatisch und somit besonders wirtschaftlich prüften.

Wie aus den Fig. 1 und 2 ersichtlich ist, umfasst die Vorrichtung eine vor der Prüfeinheit 26a, 26b angeordnete Vereinzelungseinheit 28a, 28b, welche zum Vereinzeln der Spritzgussteile 10a, 10b vor dem Prüfen vorgesehen ist. Sowohl die Entnahmeeinheit 16.2a, 16.2b der Fördereinheit 16a, 16b als auch die Vereinzelungseinheit 28a, 28b können als Greifsystem 28.1 a, 28.1 b eines Roboters ausgeführt sein. In vorteilhafter Weise können die Entnahmeeinheit 16.2a, 16.2b und die Vereinzelungseinheit 28a, 28b als räumlich getrennte Einheiten in der Vorrichtung integriert sein oder wie im vorliegenden Ausführungsbeispiel als bauliche Einheit. Dies bedeutet, dass die als reinraumtauglicher Roboter 28a, 28b ausgeführte bauliche Einheit sowohl die Funktion der Entnahmeeinheit 16.2a, 16.2b als auch die Funktion der Vereinzelungseinheit 28a, 28b übernehmen kann.

Alternativ hierzu kann die Vereinzelungseinheit 28a, 28b auch als hier nicht dargestelltes Schikanensystem der Fördereinheit 16a, 16b ausgeführt sein, wodurch eine in die Fördereinheit 16a, 16b integrierte günstige Vereinzelung der Spritzgussteile 10a, 10b bereitgestellt werden kann.

Vorzugsweise umfasst die Vorrichtung eine Kennzeichnungseinheit 30a, 30b, welche zum Kennzeichnen der verpackten Spritzgussteile 10a, 10b vorgesehen ist. Bevorzugt werden Kennzeichnungen zum Kennzeichnen des Innenbeutels und/oder des Außenbeutels bei Bag-in-Bag-System und/oder Kennzeichnen des Innenbeutels und/oder der Außenbox bei Bag-in Box-System verwendet. Beim Kennzeichnen kommen lediglich Kennzeichnungsmethoden zum Einsatz, bei welchen eine Beschädigung der Verpackung ausgeschlossen werden kann, wodurch eine Verunreinigung des Inhalts sicher vermieden werden soll. Hierfür können folgende Kennzeichnungsarten eingesetzt werden, wie beispielsweise Kennzeichnung durch Lasermarkierung, Inkjet-Bedruckung, Aufkleben eines Labels und/oder Thermodruck.

Im Anschluss an die Verpackungseinheit 14a, 14b kann eine hier nicht dargestellte Lagereinheit vorgesehen sein, welche die verpackten Spritzgussteile 10a, 10b zum Abtransport aufnimmt. Zwischen der Verpackungseinheit 14.2a, 14.2a', 14.2b, 14.2b' und der Lagereinheit kann eine Ausschleuseeinheit 36a, 36b angeordnet sein, welche die verpackten Spritzgussteile 10a, 10b aus der Reinraumgehäuseeinheit 18a, 18b heraus in die Lagereinheit befördert. In vorteilhafter Weise kann hierdurch eine bedienpersonalfreie Produktion von hochreinen Spritzgussteilen 10a, 10b in einem geschlossenen Reinraumsystem mit Reinluft realisiert werden, da während des Herstellungsprozesses kein Bedienpersonal in die Reinraumgehäuseeinheit 18a, 18b der Vorrichtung eindringen muss.

Zum Herstellung von hochreinen Spritzgussteilen 10a, 10b ist eine Spritzgusseinheit 12a, 12b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist, wobei vorzugsweise die Verarbeitung von Kunststoff vorgesehen ist.

Zum Verpacken von hochreinen Spritzgussteilen 10a, 10b ist eine Verpackungseinheit 14a, 14b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist, wobei vorzugsweise ein Shieldingbeutel-Verpackungssystem und/oder ein Blister-Verpackungssystem und/oder ein Bag-in-Bag-Verpackungssystem 14.1 a, 14.1 b, 14.2a, 14.2b und/oder ein Bag-in-Box-Verpackungssystem 14.1a', 14.1b', 14.2a', 14.2b' vorgesehen ist.

Zum Zuführen von hochreinen Spritzgussteilen 10a, 10b in eine Verpackungseinheit 14a, 14b ist eine Fördereinheit 16a, 16b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist, wobei vorzugsweise eine entlang eines Vorschubwegs 20a, 20b geführte Transporteinrichtung 16.1 a, 16.1 b zum Befüllen mit Spritzgussteilen 10a, 10b und/oder eine Rutschschieneneinheit und/oder eine Entnahmeeinheit 16.2a, 16.2b zum Entnehmen der Spritzgussteile 10a, 10b aus der Spritzgusseinheit 12a, 12b und Befüllen der Transporteinrichtung 16.1a, 16.1 b oder der Rutschschieneneinheit mit Spritzgussteilen 10a, 10b vorgesehen ist.

Zum Vorhalten von Reinluft ist eine Reinraumgehäuseeinheit 18a, 18b vorgesehen, die für ein Zusammenwirken mit einer Komponente oder mehreren Komponenten einer Vorrichtung zur Herstellung und Verpackung von hochreinen Spritzgussteilen 10a, 10b ausgebildet ist, wobei vorzugsweise eine Kapselung der Einheiten 12a, 12b, 14a, 14b, 16a, 16b, 16.1a, 16.1b, 16.2a, 16.2b, 22a, 22b, 24a, 24b, 26a, 26b, 28a, 28b, 30a, 30b, 32a, 32b, 34a, 34b, 36a und 36b der Vorrichtung vorgesehen ist.

Zum statischen Entladen von hochreinen Spritzgussteilen 10a, 10b ist eine lonisierungseinheit 24a, 24b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist, wobei eine Ionisierung mit Luftstrom und/oder eine Ionisierung ohne Luftstrom vorgesehen ist.

Zum Kühlen von hochreinen Spritzgussteilen 10a, 10b ist eine Kühlungseinheit 22a, 22b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist, wobei ein Kühlen über eine separate Kühlluftzufuhr und/oder über die in der Vorrichtung herrschende Raumtemperatur vorgesehen ist.

Zum Prüfen von hochreinen Spritzgussteilen 10a, 10b auf Dichtigkeit und/oder Vollständigkeit und/oder Einschlüsse und/oder Maßhaltigkeit ist eine Prüfeinheit 26a, 26b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist.

Zum Vereinzeln von hochreinen Spritzgussteilen 10a, 10b ist eine Vereinzelungseinheit 28a, 28b vorgesehen, die für ein Zusammenwirken mit einer Komponente oder mehreren Komponenten einer Vorrichtung zur Herstellung und Verpackung der hochreinen Spritzgussteile 10a, 10b ausgebildet ist, wobei diese vorzugsweise als ein Greifsystem 28.1 a, 28.1 b eines Roboters und/oder als ein Schikanensystem der Fördereinheit 16a, 16b vorgesehen ist.

### Bezugszeichenliste

- 10a, 10b: Spritzgussteil
- 12a, 12b: Spritzgusseinheit
- 14a, 14b: Verpackungseinheit
- 14.1a, 14.1b, 14.2a, 14.2b: Bag-in-Bag-Verpackungssystem (Verpackungseinheit)
- 14.1a', 14.1b', 14.2a', 14.2b': Bag-in-Box-Verpackungssystem (Verpackungseinheit)
- 16a, 16b: Fördereinheit
- 16.1a, 16.1b: Transporteinrichtung (Fördereinheit)
- 16.2a, 16.2b: Entnahmeeinheit (Fördereinheit)
- 18a, 18b: Reinraumgehäuseeinheit
- 18.1a, 18.1b: Reinraumversorgungseinheit
- 20a, 20b: Vorschubweg
- 22a, 22b: Kühlungseinheft
- 24a, 24b: Ionisierungseinheit
- 26a, 26b: Prüfeinheit
- 28a, 28b: Vereinzelungseinheit
- 28.1a, 28.1b: Greifsystem (Vereinzelungseinheit)
- 30a, 30b: Kennzeichnungseinheit
- 32a, 32b: Reinluftprüfeinheit
- 34a, 34b: Zutrittseinheit
- 36a, 36b: Ausschleuseeinheit

## Patentansprüche

1. Vorrichtung zur Herstellung und Verpackung von hochreinen Spritzgussteilen (10a; 10b) mit einer Spritzgusseinheit (12a, 12b), welche zum Herstellen der einzelnen Spritzgussteile (10a; 10b) vorgesehen ist, einer Verpackungseinheit (14a, 14b), welche zum Verpacken der Spritzgussteile (10a, 10b) vorgesehen ist, und einer Fördereinheit (16a, 16b), welche zum Zuführen der Spritzgussteile (10a, 10b) in die Verpackungseinheit (14a, 14b) vorgesehen ist, wobei die Vorrichtung eine Reinraumgehäuseeinheit (18a, 18b) aufweist, welche zum Vorhalten von Reinluft und zum mindestens teilweisen Aufnehmen der Spritzgusseinheit (12a, 12b), der Verpackungseinheit (14a, 14b) und der Fördereinheit (16a, 16b) in der Reinluft vorgesehen ist, **dadurch gekennzeichnet, dass** die zum Zuführen der Spritzgussteile (10a, 10b) in die Verpackungseinheit (14a, 14b) vorgesehene Fördereinheit (16a, 16b) eine Rutschschieneneinheit aufweist.

2. Vorrichtung nach Anspruch 1, **gekennzeichnet durch** eine Reinraumversorgungseinheit (18.1a, 18.1b), welche zur Versorgung der Reinraumgehäuseeinheit (18a, 18b) mit Reinluft vorgesehen ist.

3. Vorrichtung nach Anspruch 1 oder 2, **dadurch gekennzeichnet, dass** die Verpackungseinheit (14a, 14b) ein Shieldingbeutel-Verpackungssystem und/oder ein Blister-Verpackungssystem und/oder ein Bag-in-Bag-Verpackungssystem (14.1 a, 14.1 b, 14.2a, 14.2b) und/oder ein Bag-in-Box-Verpackungssystem (14.1a', 14.1 b', 14.2a', 14.2b') umfasst.

4. Vorrichtung nach einem der Ansprüche 1 bis 3, **dadurch gekennzeichnet, dass** die zum Zuführen der Spritzgussteile (10a, 10b) in die Verpackungseinheit (14a, 14b) vorgesehene Fördereinheit (16a, 16b) eine entlang eines Vorschubweges (20a, 20b) geführte Transporteinrichtung (16.1 a, 16.1 b) zum Befüllen mit Spritzgussteilen (10a; 10b) aufweist.

5. Vorrichtung nach einem der Ansprüche 1 bis 4, **dadurch gekennzeichnet, dass** die zum Zuführen der Spritzgussteile (10a, 10b) in die Verpackungseinheit (14a, 14b) vorgesehene Fördereinheit (16a, 16b) eine Entnahmeeinheit (16.2a, 16.2b) zum Entnehmen der Spritzgussteile (10a, 10b) aus der Spritzgusseinheit (12a, 12b) und Befüllen der Transporteinrichtung (16.1 a, 16.1 b) oder der Rutschschieneneinheit mit Spritzgussteilen (10a, 10b) umfasst.

6. Vorrichtung nach einem der Ansprüche 1 bis 5, **gekennzeichnet durch** eine zwischen Spritzgusseinheit (12a, 12b) und Verpackungseinheit (14a, 14b) angeordnete Ionisierungseinheit (24a, 24b), welche zum statischen Entladen der Spritzgussteile (10a; 10b) vorgesehen ist.

7. Vorrichtung nach einem der Ansprüche 1 bis 6, **gekennzeichnet durch** eine zwischen Spritzgusseinheit (12a, 12b) und Verpackungseinheit (14a, 14b) angeordnete Kühlungseinheit (22a, 22b), welche zum Kühlen der Spritzgussteile (10a; 10b) vorgesehen ist.

8. Vorrichtung nach einem der Ansprüche 1 bis 7, **gekennzeichnet durch** eine zwischen Spritzgusseinheit (12a, 12b) und Verpackungseinheit (14a, 14b) angeordnete Prüfeinheit (26a, 26b), welche zur Prüfung der Spritzgussteile (10a, 10b) auf Dichtigkeit und/oder Vollständigkeit und/oder Einschlüsse und/oder Maßhaltigkeit vorgesehen ist.

9. Vorrichtung nach einem der Ansprüche 1 bis 8, **gekennzeichnet durch** eine vor der Prüfeinheit (26a, 26b) angeordnete Vereinzelungseinheit (28a, 28b), welche zum Vereinzeln der Spritzgussteile (10a; 10b) vor dem Prüfen vorgesehen ist.

10. Vorrichtung nach einem der Ansprüche 1 bis 9, **dadurch gekennzeichnet, dass** die Entnahmeeinheit (16.2a, 16.2b) und/oder die Vereinzelungseinheit (28a, 28b) als Greifsystem (28.1a, 28.1b) eines Roboters ausgeführt ist.

11. Vorrichtung nach einem der Ansprüche 1 bis 10, **dadurch gekennzeichnet, dass** die Vereinzelungseinheit (28a, 28b) als Schikanensystem der Fördereinheit (16a, 16b) ausgeführt ist.

12. Vorrichtung nach einem der Ansprüche 1 bis 11, **gekennzeichnet durch** eine Kennzeichnungseinheit (30a, 30b), welche zum Kennzeichnen der verpackten Spritzgussteile (10a, 10b) vorgesehen ist.

13. Vorrichtung nach einem der Ansprüche 1 bis 12, **gekennzeichnet durch** eine Reinluftprüfeinheit (32a, 32b), welche zum Prüfen/Überwachen des Reinheitsgrades der Reinluft in der Reinraumgehäuseeinheit (18a, 18b) vorgesehen ist.

14. Vorrichtung nach einem der Ansprüche 1 bis 13, **gekennzeichnet durch** eine Zutrittseinheit (34a, 34b), welche zum Zutritt von Bedienpersonal zum Durchführen eines Werkzeugwechsels an der Spritzgusseinheit (12a, 12b) vorgesehen ist.

## Claims

1. Device for the production and packaging of high purity injection-moulded parts (10a, 10b), with an injection moulding unit (12a, 12b), which is provided for the production of the individual injection-moulded parts (10a, 10b), with a packaging unit (14a, 14b), which is provided for the packaging of the injection-moulded parts (10a, 10b), and with a conveying unit (16a, 16b), which is provided to feed the injection-moulded parts (10a, 10b) into the packaging unit (14a, 14b), wherein the device comprises a cleanroom housing unit (18a, 18b), which is provided to stock clean air and to at least partially receive the injection moulding unit (12a, 12b), the packaging unit (14a, 14b) and the conveying unit (16a, 16b) in the clean air, **characterized in that** the conveying unit (16a, 16b), which is provided to feed the injection-moulded parts (10a, 10b) into the packaging unit (14a, 14b), comprises a slide rail unit.

2. Device according to claim 1, **characterized by** a cleanroom supply unit (18.1 a, 18.1 b), which is provided to supply the cleanroom housing unit (18a, 18b) with clean air.

3. Device according to claim 1 or 2, **characterized in that** the packaging unit (14a, 14b) comprises a shielding-bag packaging system and/or a blister packaging system and/or a bag-in-bag packaging system (14.1 a, 14.1 b, 14.2a, 14.2b) and/or a bag-in-box packaging system (14.1 a', 14.1b', 14.2a', 14.2b').

4. Device according to one of claims 1 to 3, **characterized in that** the conveying unit (16a, 16b), which is provided to feed the injection-moulded parts (10a, 10b) into the packaging unit (14a, 14b), comprises a transport device (16.1 a, 16.1 b) which is guided along a feed path (20a, 20b) for filling with injection-moulded parts (10a, 10b).

5. Device according to one of claims 1 to 4, **characterized in that** the conveying unit (16a, 16b), which is provided to feed the injection-moulded parts (10a, 10b) into the packaging unit (14a, 14b), comprises a retrieving unit (16.2a, 16.2b) for retrieval of the injection-moulded parts (10a, 10b) from the injection moulding unit (12a, 12b) and for filling the transport device (16.1 a, 16.1 b) or the slide rail unit with injection-moulded parts (10a, 10b).

6. Device according to one of claims 1 to 5, **characterized by** a ionization unit (24a, 24b) arranged between injection moulding unit (12a, 12b) and packaging unit (14a, 14b), which is provided for the static discharging of the injection-moulded parts (10a, 10b).

7. Device according to one of claims 1 to 6, **characterized by** a cooling unit (22a, 22b) arranged between injection moulding unit (12a, 12b) and packaging unit (14a, 14b), which is provided for cooling the injection-moulded parts (10a, 10b).

8. Device according to one of claims 1 to 7, **characterized by** an examination unit (26a, 26b) arranged between injection moulding unit (12a, 12b) and packaging unit (14a, 14b), which is provided for the examination of the injection-moulded parts (10a, 10b) regarding impermeability and/or completeness and/or inclusions and/or dimensional stability.

9. Device according to one of claims 1 to 8, **characterized by** a singularising unit (28a, 28b) arranged before the examination unit (26a, 26b), which is provided for singularising the injection-moulded parts (10a, 10b) prior to examination.

10. Device according to one of claims 1 to 9, **characterized in that** the retrieving unit (16.2a, 16.2b) and/or the singularising unit (28a, 28b) is embodied as a gripping system (28.1 a, 28.1 b) of a robot.

11. Device according to one of claims 1 to 10, **characterized in that** the singularising unit (28a, 28b) is embodied as a chicane system of the conveying unit (16a, 16b).

12. Device according to one of claims 1 to 11, **characterized by** a labelling unit (30a, 30b), which is provided for labelling the packaged injection-moulded parts (10a, 10b).

13. Device according to one of claims 1 to 12, **characterized by** a clean air examination unit (32a, 32b), which is provided for examining/monitoring the level of purity of the clean air in the cleanroom housing unit (18a, 18b).

14. Device according to one of claims 1 to 13, **characterized by** an access unit (34a, 34b), which is provided for the access of service personnel for carrying out a tool replacement at the injection moulding unit (12a, 12b).

## Revendications

1. Dispositif pour la fabrication et l'emballage de pièces moulées par injection (10a, 10b) de haute pureté, avec une unité de moulage par injection (12a, 12b), laquelle est prévue pour la fabrication des pièces moulées par injection (10a, 10b) individuelles, avec une unité d'emballage (14a, 14b), laquelle est prévue pour l'emballage de pièces moulées par injection (10a, 10b), et avec une unité d'alimentation (16a, 16b), laquelle est prévue pour alimenter les pièces moulées par injection (10a, 10b) dans l'unité d'emballage (14a, 14b),
le dispositif présentant une unité de boîtier de salle propre (18a, 18b), laquelle est prévue pour tenir à disposition de l'air pur et pour au moins partiellement recevoir l'unité de moulage par injection (12a, 12b), l'unité d'emballage (14a, 14b) et l'unité d'alimentation (16a, 16b) dans l'air pur,
**caractérisé en ce que** l'unité d'alimentation (16a, 16b) prévue pour alimenter les pièces moulées par injection (10a, 10b) dans l'unité d'emballage (14a, 14b) présente une unité de rail coulissant.

2. Dispositif selon la revendication 1, **caractérisé par** une unité d'alimentation d'une salle propre (18.1 a, 18.1 b), laquelle est prévue pour l'approvisionnement de l'unité de boîtier de salle propre (18a, 18b) avec de l'air pur.

3. Dispositif selon la revendication 1 ou 2, **caractérisé en ce que** l'unité d'emballage (14a, 14b) comprend un système d'emballage des sacs Shielding et/ou un système d'emballage Blister et/ou un système d'emballage Bag-in-Bag (14.1 a, 14.1 b, 14.2a, 14.2b) et/ou un système d'emballage Bag-in-Box (14.1a', 14.1b', 14.2a', 14.2b').

4. Dispositif selon l'une quelconque des revendications 1 à 3, **caractérisé en ce que** l'unité d'alimentation (16a, 16b) prévue pour alimenter les pièces moulées par injection (10a, 10b) dans l'unité d'emballage (14a, 14b) présente un dispositif de transport (16.1 a, 16.1 b) pour un remplissage avec des pièces moulées par injection (10a, 10b), laquelle est guidée le long d'une voie d'avancement.

5. Dispositif selon l'une quelconque des revendications 1 à 4, **caractérisé en ce que** l'unité d'alimentation (16a, 16b) prévue pour alimenter les pièces moulées par injection (10a, 10b) dans l'unité d'emballage (14a, 14b) présente une unitè de prélèvement (16.2a, 16.2b) pour le prélèvement des pièces moulées par injection (10a, 10b) de l'unité de moulage par injection (12a, 12b) et pour le remplissage du dispositif de transport (16.1 a, 16.1 b) ou de l'unité de rail coulissant avec des pièces moulées par injection (10a, 10b).

6. Dispositif selon l'une quelconque des revendications 1 à 5, **caractérisé par** une unité d'ionisation (24a, 24b) disposée entre l'unité de moulage par injection (12a, 12b) et l'unité d'emballage (14a, 14b), laquelle est prévue pour la décharge statique des pièces moulées par injection (10a, 10b).

7. Dispositif selon l'une quelconque des revendications 1 à 6, **caractérisé par** une unité de refroidissement (22a, 22b) disposée entre l'unité de moulage par injection (12a, 12b) et l'unité d'emballage (14a, 14b), laquelle est prévue pour refroidir les pièces moulées par injection (10a, 10b).

8. Dispositif selon l'une quelconque des revendications 1 à 7, **caractérisé par** une unité d'examen (26a, 26b) disposée entre l'unité de moulage par injection (12a, 12b) et l'unité d'emballage (14a, 14b), laquelle est prévue à examiner les pièces moulées par injection (10a, 10b) quant à une étanchéité et/ou intégralité et/ou des inclusions et/ou stabilité dimensionnelle.

9. Dispositif selon l'une quelconque des revendications 1 à 8, **caractérisé par** une unité de désassortiment (28a, 28b) disposée avant de l'unité d'examen (26a, 26b), laquelle est prévue à désassortir les pièces moulées par injection (10a, 10b) avant de l'examen.

10. Dispositif selon l'une quelconque des revendications 1 à 9, **caractérisé en ce que** l'unité de prélèvement (16.2a, 16.2b) et/ou l'unité de désassortiment (28a, 28b) est implémentée comme système de saisissement (28.1 a, 28.1 b) d'un robot.

11. Dispositif selon l'une quelconque des revendications 1 à 10, **caractérisé en ce que** l'unité de désassortiment (28a, 28b) est implémentée comme système des chicanes de l'unité d'alimentation (16a, 16b).

12. Dispositif selon l'une quelconque des revendications 1 à 11, **caractérisé par** une unité de marquage (30a, 30b), laquelle est prévue à marquer les pièces moulées par injection (10a, 10b) emballées.

13. Dispositif selon l'une quelconque des revendications 1 à 12, **caractérisé par** une unité d'examiner de l'air pur (32a, 32b), laquelle est prévue à examiner/surveiller le degré de pureté de l'air pur dans l'unité de boîtier de salle propre (18a, 18b).

14. Dispositif selon l'une quelconque des revendications 1 à 13, **caractérisé par** une unité d'accès (34a, 34b), laquelle est prévue pour l'accès d'un personnel opérateur pour effectuer un remplacement d'outil à l'unité de moulage par injection (12a, 12b).
